# EUROPÄISCHE PATENTSCHRIFT

(11) **EP 0 787 045 B1**
(45) Veröffentlichungstag und Bekanntmachung des Hinweises auf die Patenterteilung: **12.01.2000**
(21) Anmeldenummer: 95937801.9
(22) Anmeldetag: 19.10.1995
(51) Int. Cl.: B21B 1/00, C09D 17/00, C09D 175/04, C09D 133/00, C09D 167/00

(54) **FÜLLSTOFFKOMPONENTE ZUR VERWENDUNG IN WÄSSRIGEN BASISLACKEN**
FILLER COMPONENT FOR USE IN AQUEOUS BASE PAINTS
MATIERE DE CHARGE UTILISEE DANS DES PEINTURES D'APPRET AQUEUSES

(30) Priorität: 22.10.1994 DE 4437841
(43) Veröffentlichungstag der Anmeldung: 06.08.1997
(73) Patentinhaber: BASF Coatings Aktiengesellschaft, 48165 Münster (DE)
(72) Erfinder: HARTUNG, Michael, D-59590 Geseke (DE); LEIBFARTH, Frank, D-72555 Metzingen (DE); GÖBEL, Andreas, D-50769 Köln (DE); OSLOWSKI, Hans-Josef, D-48163 Münster (DE)
(74) Vertreter: Fitzner, Ulrich, Dr.
(86) Internationale Anmeldenummer: EP9504106
(87) Internationale Veröffentlichungsnummer: WO9612769

(56) Entgegenhaltungen:
- EP-A- 0 228 003
- EP-A- 0 255 078
- EP-A- 0 438 090
- EP-A- 0 614 951
- DE-A- 4 328 287

## Beschreibung

Die vorliegende Erfindung betrifft einen wäßrigen Basislack zur Beschichtung von Metall- und Kunststoffsubstraten, welcher eine Füllstoffkomponente und eine wäßrige übliche Basislackzusammensetzung, enthaltend ein oder mehrere wasserverdünnbare Bindemittel, Farb- und/oder Effektpigmente, organische Lösemittel und gegebenenfalls Rheologiehilfsmittel, wobei die Füllstoffkomponente enthält: eine wäßrige Dispersion eines wasserverdünnbaren Polyurethanharzes oder mehrerer wasserverdünnbarer Polyurethanharze und einen oder mehrere Füllstoffe und/oder Extender, ein Verfahren zur Direktlackierung mit einem solchen Basislack sowie Verwendungen eines solchen Basislacks.

Automobilkarossen, Anbauteile für die Automobilindustrie sowie eine Vielzahl von Teilen für Nicht-Automobil-Anwendungen werden aus verschiedensten Metallen und zunehmend aus Kunststoff gefertigt.

Kunststoffbeschichtungen müssen einerseits eine gute Haftung auf dem jeweiligen Kunststoffsubstrat aufweisen, andererseits müssen Kunststoffbeschichichtungen Oberflächenfehler der Kunststoffsubstrate abdecken. Eine direkte und damit grundierungsfreie Lackierung von wäßrigen Effekt-Basislacken oder Uni-Basislacken auf übliche Kunststoffsubstrate ist problematisch, da ohne vorherige Grundierung Oberflächenfehler, wie z. B. Fließlinien, nicht ausreichend abgedeckt werden können.

Oberflächenfehler bei solchen Kunststoffsubstraten und bei Metallsubstraten, wie Riefen, Poren, Lunker oder Fließlinien, werden üblicherweise durch dickschichtige Primer und/oder Decklacke abgedeckt. Primerfreie Basislacke sind aus der nicht vorveröffentlichttn älteren Anmeldung DE 4315467.0 bekannt. Doch ist dieses System nicht für wäßrige Basislacke anwendbar. Bei der Applikation von herkömmlichen wäßrigen Uni- oder Effekt-Basislacken mit hohen Ansprüchen an optische und weitere technologische Eigenschaften (wie die elektrostatische Applikation des Klarlackes) ist der vorherige Auftrag eines Primers bzw. eines Füllers nämlich unerläßlich. Eine direkte, primerfreie bzw. füllerfreie Lackierung Von wäßrigen Basislacken ist bei den herstellungsbedingten Inhomogenitäten der polaren Kunststoffoberfläche bzw. der Metalloberfläche nur unter deutlichen Qualitätseinbußen möglich.

Es ist bekennt, wäßrige Basislacke einzusetzen. Derartige wäßrige Basislacke sind für die Niedrigtemperaturtrocknung von Kunststoffen nur bedingt einsetzbar. Ein weiterer Nachteil besteht in der mangelhaften Schleiffähigkeit der aus wäßrigen Basislacken resultierenden Beschichtungen, was darauf zurückzuführen ist, daß die wäßrigen Basislacke i. a. keine mineralischen Füllstoffe enthalten.

In der DE 4107136 sind wäßrige Basislacke beschrieben. Eine Anwendung für die direkte Lackierung von Kunststoffoberflächen mit anschließender elektrostatischer Applikation der darauf folgenden Klarlackschicht wird nicht beschrieben.

Aus der Literaturstelle EP-A-614951 sind Farbmodule für unifarbige Überzüge, enthaltend Füllstoffe und anionisch stabilisierte wasserverdünnbare Urethanharze, bekannt, wobei diese Farbmodule als Pasten vorliegen und mindestens 20% Wasser enthalten.

Aus der Literaturstelle EP-A-438090 ist die Herstellung von wäßrigen Bindemittelzusammensetzungen und Bildung einer Farbpaste durch Dispergieren von 5 - 65% Füllstoffen und 10 - 95% einer wäßrigen Polyurethanzusammensetzung bekannt. Der maximale Anteil an Polyurethan in der Bindemittelzusammensetzung ist 40%. Die Farbpaste weist einen Festkörper von über 70% auf.

Die der vorliegenden Erfindung zugrunde liegende Aufgabe bestand daher darin, die zuvor geschilderten Nachteile des Standes der Technik zu beseitigen. So sollten wäßrige Basislacke zur Beschichtung von üblichen, insbesondere polaren Kunsstoffsubstraten, wie z. B. Polycarbonat, Polyamid, Polystyrol, Styrolcopolymerisate, Polyester, Polyphenylenoxide, vorbehandelte, d. h. oberflächenaktivierte Polyolefine, sowie Blends dieser und weiterer Kunststoffe, Reaktionskunststoffe, z. B. PUR-RIM, SMC, BMC u. ä. sowie von Metallsubstraten, zur Verfügung gestellt werden, mit denen eine direkte Lackierung dieser Substrate möglich ist, das heißt, bei deren Verwendung auf die Verwendung von Primern bei Kunststoffsubstraten bzw. Füllern bei Metallsubstraten, die für die Automobillackierung geeignet sein sollen, verzichtet werden kann, was eine erhebliche Kostenersparnis zur Folge hat. Die wäßrigen Basislacke sollten eine gute Haftung auf dem Substrat aufweisen, und sie sollten trotz Einsparung einer Grundierung insbesondere zu einer guten Abdeckung von Oberflächenfehlern, wie z. B. Riefen und Fließlinien, führen.

Die Aufgabe wird überraschenderweise gelöst durch wäßrige Basislacke, die zur direkten Beschichtung, d. h. primerfreien bzw. grundierungsfreien Beschichtung, Von polaren Kunststoffsubstraten und Metallsubstraten geeignet sind.

Die vorliegende Erfindung lehrt im einzelnen einen wäßrigen Basislack zur Beschichtung von Metall- und Kunststoffsubstraten, dadurch gekennzeichnet, daß er 10 bis 70 Gew.-% einer Füllstoffkomponente und 90 bis 30 Gew.-% einer wäßrigen üblichen Basislackzusammen- Setzung, enthaltend ein oder mehrere wasserverdünnbare Bindemittel, Farb- und/oder Effektpigmente, organische Lösemittel und gegebenenfalls Rheologiehilfsmittel, enthält, wobei die Füllstoffkomponente enthält: a1)10 bis 70 Gew.-% einer wäßrigen Dispersion eines wasserverdünnbaren Polyurethanharzes oder mehrerer wasserverdünnbarer Polyurethanharze, wobei der Polyurethanfeststoffgehalt in der wäßrigen Dispersion 10 bis 60 Gew.-%, vorzugsweise 20 bis 50 Gew,-%, beträgt, a2)0 bis 30 Gew.-% eines oder mehrerer Aminoplastharze und/oder eines blockierten Polyisocyanats, a3)0 bis 50 Gew.-% eines oder mehrerer sich von a1) unterscheidender physikalisch trocknender Bindemittel, a4)5 bis 40 Gew.-% eines oder mehrerer Füllstoffe und/oder Extender, a5)0 bis 30 Gew.-% Farb- und/oder Effektpigmente, a6)0 bis 5 Gew.-% eines oder mehrerer Rheologiehilfsmittel und/oder Lackhilfsmittel und, a7)0 bis 10 Gew.-% organisches Lösemittel.

Die Füllstoffkomponente wird gemäß der vorliegenden Erfindung in Basislacken zur direkten Beschichtung der zuvor genannten Substrate eingesetzt.

Im folgenden werden die einzelnen Bestandteile der erfindungsgemäß eingesetzten Füllstoffkomponente näher erläutert.

Die Füllstoffkomponente enthält 10 bis 70 Gew.-%, bevorzugt 40 bis 55 Gew.-%, eines wäßrigen Polyurethanharzes oder mehrerer Polyurethanharze a1). Für den Fall, daß die Füllstoffkomponente keine Vernetzerkomponente a2) enthält, handelt es sich dabei um elastische, aromatische und/oder aliphatische, verzweigte oder lineare Polyurethanelastomere mit einem guten physikalischen Trocknungsvermögen und einem hohen spezifischen Volumen. Die Polyurethanelastomere können freie, zur Vernetzung zur Verfügung stehende Hydroxylgruppen aufweisen.

Für den Fall, daß die Füllstoffkomponente eine Vernetzerkomponente a2) enthält, wird als Komponente a1) mindestens eine wäßrige Polyurethanharzdispersion mit einer ausreichend hohen Hydroxylzahl eingesetzt, d.h. die Polyurethanharzdispersion weist eine OH-Zahl im Bereich von 50 bis 500, bevorzugt im Bereich von 100 bis 350 mg KOH/g auf. Die zur Herstellung der hydroxylgruppenhaltigen Polyurethanharzdispersionen eingesetzten Polyole können niedermolekular und/oder hochmolekular sein. Als höhermolekulare Polyolkomponente werden gesättigte oder ungesättigte Polyesterpolyole und/oder Polyetherpolyole mit einer Molmasse von 400 bis 5000 eingesetzt. Die Polyesterpolyole werden durch Veresterung von organischen Dicarbonsäuren oder ihren Anhydriden mit organischen Diolen hergestellt, oder sie leiten sich von einer Hydroxycarbonsäure oder einem Lacton ab. Um verzweigte Polyesterpolyole herzustellen, können in geringem Umfang Polyole oder Polycarbonsäuren mit einer höheren Wertigkeit verwendet werden. Die zur Herstellung der Polyurethanharze verwendeten Isocyanate sind aliphatische, cycloaliphatische und/oder aromatische Polyisocyanate mit mindestens zwei Isocyanatgruppen pro Molekül. Bevorzugt sind die Isomeren oder Isomerengemische organischer Diisocyanate. Die Polyisocyanatkomponente kann auch einen Anteil höherwertiger Polyisocyanate enthalten. Die mittlere Funktionalität kann gegebenenfalls durch Zusatz von Monoisocyanaten gesenkt werden. Beispiele für geeignete Polyisocyanate sind 1,3-Bis(2-isocyanatoprop-2-yl)benzol, Phenylendiisocyanate, Toluylendiisocyanate, Xylylendiisocyanat, Biphenylendiisocyanat, Naphthylendiisocyanat, Diphenylmethandiisocyanate, Isophorondiisocyanat, Cyclopentylendiisocyanat, Cyclohexylendiisocyanat, Methylcyclohexylendiisocyanat, Dicyclohexylmethandiisocyanat, Trimethylendiisocyanat, Tetramethylendiisocyanat, Pentamethylendiisocyanat, Hexamethylendiisocyanat, Propylendiisocyanat, Ethylethylendiisocyanat und Trimethylhexandiisocyanat.

Die hydroxylgruppenhaltigen Polyurethanharzdispersionen können durch gleichzeitige Umsetzung des Polyisocyanats mit einem Polyol-Überschuß hergestellt werden. Die Umsetzung kann auch stufenweise erfolgen. Die Herstellung kann ggf. in Gegenwart eines Katalysators, wie organozinnverbindungen und/oder tertiären Aminen, durchgeführt werden. Die Umsetzung wird üblicherweise in Gegenwart organischer Lösemittel, die keinen aktiven Wasserstoff nach Zerewitinoff enthalten, durchgeführt. Die Dispergierung in Wasser erfolgt in der Regel durch vorherige Neutralisation der Carboxylgruppen mit Aminen. Im Bedarfsfall kann durch eine Vakuumdestillation der Anteil an organischen Lösungsmitteln reduziert werden. Vorzugsweise enthalten die wäßrigen Polyurethandispersionen einen Feststoffgehalt von 10 bis 60 Gew.-%, insbesondere 20 bis 50 Gew.-%. Ganz besonders bevorzugt werden ein Feststoffgehalt von 20 bis 40 Gew.-% und ein Lösungsmittelgehalt von 2 bis 10 Gew.-%.

Die erfindungsgemäß eingesetzte Füllstoffkomponente enthält als Komponente a2) 0 bis 30 Gew.-% eines oder mehrerer Aminoplastharze und/oder eines blockierten Polyisocyanats oder mehrerer blockierter Polyisocyanate, die als Vernetzungsmittel wirken können, wenn die Komponente a1) entsprechende funktionelle Gruppen, wie z.B. Hydroxylgruppen enthält. Für den Fall, daß die Füllstoffkomponente ausschließlich physikalisch trocknende Polyurethanharze (Komponente a1)) enthält, wird kein Aminoplastharz und kein blockiertes Polyisocyanat verwendet, es sei denn in der Funktion als Lackadditiv gem. a6). Enthält die Komponente a1) ein Polyurethanharz mit einer ausreichenden Anzahl an vernetzbaren Hydroxylgruppen, enthält die Füllstoffkomponente Aminoplastharze oder blockierte Polyisocyanate als Vernetzungsmittel.

Typische Aminoplastharze sind Melamin-, Benzoguanamin- und Harnstoff-Formaldehydharze. Bevorzugt werden diese in mit niederen Alkoholen, meistens Methanol und/oder Butanol, veretherter Form verwendet. Geeinriete Aminoplastharze sind beispielsweise unter dem Warenzeichen Cymel, Luwipal, Maprenal und Beetle auf dem Markt erhältlich. Besonders bevorzugt werden als Komponente a2) Melaminharze eingesetzt.

Ein geeignetes Aminoplastharz ist beispielsweise Hexemethoximethymelemin.

Selbstverständlich sind neben den Kondensationsprodukten mit Formaldehyd auch solche mit anderen Aldehyden verwendbar.

Typische blockierte Polyisocyanate sind Additionsprodukte von Polyisocyanaten, beispielsweise vom Typ Hexamethylendiisocyanat oder Toluylendiisocyanat, mit geeigneten Blockierungsmitteln, wie Malonsäurediethylester, Acetessigester, Hydroxylamin, Caprolactam, Aryl- und Alkylmercaptanen, Monomethylanilin, Acetonoxim, Diphenylamin, Phenolen und α-Pyrrolidon. Sie sind auf dem Markt beispielsweise unter der Handelsbezeichnung Desmodur erhältlich. Zur Herstellung der blockierten Polyisocyanate können selbstverständlich auch NCO-Präpolymere verwendet werden, bei diesen blockierten Isocyanaten handelt es sich beispielsweise um mit Phenol blockierte Polyisocyanate auf Basis von Toluylendiisocyanat und einer Triolkomponente.

Die Vernetzerharze der Komponente a2) werden vornehmlich verwendet, wenn Trocknungstemperaturen von mehr als 90°C angewendet werden. Dies ist bei der Lackierung von Metallsubstraten der Fall, während bei der Lackierung von Kunststoffsubstraten niedrige Trocknungstemperaturen erwünscht sind. Im letzteren Fall reagieren die als Komponente a1) eingesetzten wäßrigen Polyurethanharze nur in geringem Maße mit dem Vernetzer. Demzufolge werden keine oder nur geringe Anteile der Komponente a2) verwendet.

Als Komponente a3) enthält die erfindungsgemäße Füllstoffkomponente 0 bis 50 Gew.-%, bevorzugt 0 bis 10 Gew.-%, eines oder mehrerer sich von a1) unterscheidender physikalisch trocknender wasserverdünnbarer Bindemittel. Unter physikalischem Trocknungsvermögen ist zu verstehen, daß die Bindemittel nach Abgabe der organischen Lösemittel und Wasser aus dem Lackfilm bei Trocknung unterhalb von etwa 50 °C dem Lackfilm keine klebrigen Eigenschaften mehr verleihen. Bindemittel dieser Art sind dem Fachmann geläufig; es handelt sich dabei um übliche Bindemittel, wie sie als Lackrohstoffe im Handel erhältlich sind. Beispiele für geeignete physikalisch trocknende Bindemittel sind Polyesterharze, Alkydharze, Polyacrylatharze, Cellulosederivate, Melaminharze u. ä. in wäßriger Form. Die physikalisch trocknenden Bindemittel der Komponente a3) beeinflussen technologische Eigenschaften, wie z. B. Überlackierbarkeit und das Trocknungsverhälten. Bevorzugt werden die sich von der Komponente a1) unterscheidenden, physikalisch trocknenden, wasserverdünnbaren Bindemittel a3) in einem Anteil von 0 bis 10 Gew.-% eingesetzt.

Die erfindungsgemäß eingesetzte Füllstoffkomponente enthält 5 bis 40 Gew.-%, bevorzugt 10 bis 30 Gew.-%, eines oder mehrerer Füllstoffe und/oder Extender (Komponente a4)). Beispiele für geeignete Füllstoffe und/oder Extender sind silikatische Füllstoffe, wie beispielsweise Keolin (China Clay), Talkum, Kieselkreide, verschiedene Glimmersorten, wie beispielsweise Eisehglimmer, Siliciumcarbid und Quarzmehl, carbonatische Füllstoffe, wie beispielsweise Kreide und Dolomit, sulfatische Füllstoffe, wie beispielsweise Barium- und Calciumnsulfat. Die Komponente a4) ist eine wesentliche Komponente der Füllstoffkomponente und führt dazu, daß zum einen das mechenisch=technologische Niveau (z. 3. bezüglich Steinschlagschutz) deutlich verbessert wird, zum anderen aber eine ausgezeichnete optische Abdeckung von Substratfehlern erreicht wird.

Gegebenenfalls können in der erfindungsgemäß eingesetzten Füllstoffkomponente bis zu 30 Gew.-% Ferb- und/oder Effektpigmente eingesetzt werden. Beispiele für geeignete anorganische Farbpigmente sind Weißpigmente, wie beispielsweise Titandioxid, Bleiweiß, Zinkweiß, Schwarzpigmente, wie beispielsweise Ruß, Buntpigmente, beispielsweise Eisenoxid- und Chromoxid-Pigmente, oxidische Mischphasenpigmente. Als Effektpigmente können in der erfindungsgemäßen Füllstoffkomponente Metallic-Pigmente oder Effektpigmente auf der Basis von Glimmerplättchen bzw. Mica-Plättchen eingesetzt werden, wie sie z. B. auf dem Gebiet der Kraftfahrzeuglackierung üblich sind. Es können auch speziell für die Beschichtung von Kunststoffsubstraten elektrisch leitfähige Pigmente verwendet werden. Der Einsatz von Farb- und Effektpigmenten inkl. Ruß ist fakultativ und wird nur bei höchsten Ansprüchen an die Farbtongenauigkeit verwendet. In den meisten Fällen wird ein hellgrau getönter Pastenzusatz für helle Farbtöne und ein dunkelgrau getönter Zusatz für dunkle Farbtöne empfohlen. Das Pigment/Bindemittelverhältnis der erfindungsgemäßen Füllstoffkomponente beträgt etwa 1 : 0,6 - 2.0, bevorzugt 1 : 1,3 - 1,8, wobei bei der Bestimmung des Pigment/Bindemittelverhältflisses der Begriff "Pigment" alle anorganischen Bestandteile, wie z. B. Extender und anorganische Rheologiehilfsmittel, umfaßt.

Die erfindungsgemäß eingesetzten Füllstoffkomponenten enthalten 0 bis 5 Gew.-% eines oder mehrerer Rheologiehilfsmittel, wie z. B. Wachse, Assoziativ-Verdicker, Schichtsilikate, organisch modifizierte Mineralstoffe u. ä. sowie ggf. übliche Lackadditive, wie sie dem Fachmann geläufig und kommerziell erhältlich sind. Der Einsatz der Rheologiehilfsmittel ist fakultativ und dient zur Erfüllung höchster Ansprüche an die Standfestigkeit des Naßfilms. Durch die ausgewählten Bindemittel/Pigment-Kombinationen sowie durch das gewählte Bindemittel/Pigment-Verhältnis wird bereits eine sehr gute Standfestigkeit und damit Schichtdicke gewährleistet. Außer Rheologiehilfsmitteln kommen auch andere übliche Lackhilfsmittel, z.B. Verlaufsmittel, Entschäumungsmittel usw. in Betracht.

Die Komponente a7) der erfindungsgemäß eingesetzten Füllstoffkomponenten besteht aus 3 bis 10 Gew.-% organischer Lösemittel. Dabei handelt es sich um übliche Lacklösemittel, wie niedermolekulare Ester, Aromaten, Glykolester, Glykolether usw., wobei die organischen Lösemittel insbesondere auf die Verträglichkeit mit den verwendeten wäßrigen Polyurethandispersion (Komponente a1)) abgestimmt werden. Der Einsatz aliphatischer und aromatischer Verschnittmittel ist daher nur begrenzt möglich. Beispiele für besonders geeignete organische Lösemittel sind Butylglykol, Butyldiglykol und Ether bzw. Ester des Propylenglykols.

Die erfindungsgemäß eingesetzten Füllstoffkomponenten werden hergestellt, indem die vorgesehenen Pigmente und Extender in einer Teilmenge des Gesamtbindemittels vordispergiert und anschließend zu ausreichender Kornfeinheit gemahlen werden. Als Auflackmischung dienen die übrige Bindemittelmenge sowie Rheologiehilfsmittel und Lösemittel.

Die Füllstoffkomponenten werden gemäß der vorliegenden Erfindung handelsüblichen wäßrigen Basislacken (vgl. DE 4107136), die zur Beschichtung von Metall- oder Kunststoffsubstraten geeignet sind, zugesetzt.

Das Gesamtgewicht der die Füllstoffkomponente enthaltenden Basislacke beträgt 100 Gew.-%. Vorzugsweise bestehen die Basislacke aus 30 bis 60 Gew.-% der Füllstoffkomponente sowie 70 bis 40 Gew.-% einer üblichen Basislackzusammensetzung.

Übliche wäßrige Basislackzusammensetzungen, die zusammen mit der erfindungsgemäßen Füllstoffkomponente zu dem erfindungsgemäßen Basislack kombiniert werden, sind solche aus handelsüblichen Rohstoffen, wie wasserverdünnbaren Polyestern, Polyacrylaten, Polyurethandispersionen, Rheologiehilfsmitteln, Vernetzern, sowie Farb- und/oder Effektpigmenten, wie beispielsweise Metallic-Pigmenten und Glimmerplättchen. Übliche Farbpigmente sind die bereits bei der Beschreibung der Komponente a5) der Füllstoffkomponente zuvor erwähnten Pigmente. Derartige Basislacke sind dem Fachmann bekannt und brauchen daher nicht weiter beschrieben zu werden. Besonders bevorzugt werden als Bindemittel für die Basislackzusammensetzung Polyurethandispersion, wäßrige Polyesterlösung, Melaminharz, denen Rheologiehilfsmittel auf Silikatbasis zugesetzt wird.

Die unter Zusatz der Füllstoffkomponente entstandenen erfindungsgemäßen Basislacke können ohne vorherige Applikation einer Grundierung und eines Füllers auf Metallsubstrate bzw. ohne vorherige Grundierung auf Kunststoffsubstrate aufgebracht werden, wobei die erhaltenen Beschichtungen eine ausgezeichnete Haftung aufweisen und Oberflächenfehler, insbesondere Riefen und Fließlinien, in hervorragender Weise abgedeckt werden. Bei erhöhten Ansprüchen an den Korrosionsschutz, wie dies der Fall ist bei beschichteten Metallsubstraten für die Automobillackierung, erfolgt die Applikation des Basislackes direkt z.B. auf das mittels Elektrotauchlackierung grundierte Metallsubstrat.

Die vorliegende Erfindung betrifft daher ebenfalls ein Verfahren zur Direktlackierung von Metall- und Kunststoffsubstraten, das dadurch gekennzeichnet ist, daß direkt auf das Substrat der die wäßrige Füllstoffkomponente enthaltende wäßrige Basislack aufgebracht wird. Der erfindungsgemäße wäßrige Basislack wird also gemäß der vorliegenden Erfindung direkt auf das Substrat appliziert. Bei der Beschichtung von Kunststoffsubstraten ist es möglich, aber nicht unbedingt erforderlich, das Substrat einer Vorbehandlung (Beflammen, Plasma, Corona) zu unterziehen. Nach kurzer Zwischenablüftung wird dann ein üblicher Basislack appliziert, der jedoch keine Füllstoffkomponente enthält. Unter kurzer Zwischenlüftung ist ein Ablüften beispielsweise bei einer Temperatur zwischen 20 und 50°C, 30 sec. bis 5 Minuten, vorzugsweise 1 bis 2 Minuten, zu verstehen.

Beispiele für geeignete füllstoffkomponentenfreie Basislacke sind die bereits oben beschriebenen üblichen Basislackzusammensetzungen, welche ein oder mehrere Bindemittel, Rheologiehilfsmittel, Farb- und/oder Effektpigmente und organische Lösemittel enthalten. Nach erneutem Ablüften bei Temperaturen zwischen 20°C und 90°C, vorzugsweise 30°C bis 80°C für 5 bis 15, vorzugsweise 8 bis 12 Minuten und anschließendem Abkühlen wird das beschichtete Metall- oder Kunststoffsubstrat mit einem üblichen Klarlack überlackiert. Anschließend werden die aufgebrachten Schichten gemeinsam unter Erwärmen ausgehärtet.

Als Klarlacke werden übliche im Handel erhältliche witterungsbeständige Klarlacke verwendet. Geeignet hierfür sind beispielsweise isocyanathärtende Zweikomponenten-Klarlacke auf der Basis von Polyester- oder Acrylatharzen sowie für die Hochtemperaturtrocknung von Metallen geeignete selbstvernetzende 1-Komponenten-Klarlacke auf Polyesterharz- oder Polyacrylatharzbasis. Derartige Lacksysteme sind üblich und dem Fachmann bekannt. Beispiele sind beschrieben in der Druckschrift "Produkte für die Lackindustrie", Band 2, Desmodur/Desmophen der Firma Bayer sowie in Houben Weyl "Methoden der Organischen Chemie", Band 14/2, Makromolekulare Stoffe, Seite 57, Polyurethane, bearbeitet von E. Müller.

Der die Füllstoffkomponente enthaltende Basislack wird derart aufgetragen, daß eine Trockenfilmschichtstärke im Bereich von 10 bis 20 µm resultiert. Der nach kurzer Zwischenablüftung applizierte füllstoffkomponentenfreie Basislack wird üblicherweise in einer Trockenfilmschichtstärke von 7 bis 10 µm aufgebracht.

Das vorstehend beschriebene Verfahren ist besonders zur Beschichtung von Kunststoff-Anbauteilen in der Automobilindustrie geeignet. Bei den Kunststoffsubstraten handelt es sich um polare Kunststofftypen, wie Polycarbonat, Polyamid, Polystyrol, Styrolcopolymerisate, Polyester, Polyphenylenoxide sowie Blends dieser Kunststofftypen, Reaktionskunststoffe, z. B. PUR-RIM, SMC, BMC u. ä.. Ggf. kann es sich auch um Polyolefinsubstrate vom Polyethylen- und Polypropylentyp handeln, wenn diese einen relativ hohen Kautschukgehalt aufweisen, wie z. B. das unter der Handelsbezeichnung Keltan TP 0550 (Hersteller DSM) bekannte PP-EPDM, sowie bsw. mittels Beflammung o. ä. oberflächenaktivierte Polyolefin-Typen.

Bei der Beschichtung von Metallsubstraten ist darauf zu achten, ob diese für die Außen- oder Innenanwendung bestimmt sind. Für die Außenanwendung, z. B. bei Metallsubstraten zur Herstellung von Automobilkarossen, ist es größtenteils notwendig, mittels Elektrotauchlackierung oder anderweitig korrosionsgeschützte Metalle zu verwenden. Bei der Lackierung mit der erfindungsgemäßen Füllstoffkomponente kann in diesem Fall auf die Verwendung eines Füllers verzichtet werden, was von enormem Vorteil ist. Handelt es sich um Metallsubstrate für die Innenanwendung, bsw. um Haushaltsgeräte, kann der die Füllstoffkomponente enthaltende Basislack direkt auf das blanke Metall appliziert werden.

Die Erfindung betrifft des weiteren ein Verfahren zum Lackieren von mittels Elektrotauchlackierung grundierten Metallsubstraten, das dadurch gekennzeichnet ist, daß auf das elektrotauchgrundierte Metallsubstrat der die Füllstoffkomponente enthaltende Basislack appliziert wird, nach kurzer Zwischenablüftung ein füllstoffkomponentenfreier Basislack appliziert wird, nach kurzem Ablüften mit einem Klarlack überlackiert wird und anschließend gemeinsam unter Erwärmen ausgehärtet wird. Bezüglich geeigneter füllstoffkomponentenfreier Basislacke, geeigneter Klarlacke und üblicher Trockenfilmschichtstärken wird auf die vorherigen Ausführungen verwiesen. Der besondere Vorteil der erfindungsgemäßen Verfahren zur Beschichtung von Metallsubstraten bzw. elektrotauchgrundierter Metallsubstrate ist darin begründet, daß auf die Applikation eines Füllers, der normalerweise vor der Applikation des Basislackes aufgebracht wird, verzichtet werden kann. Der mögliche Verzicht auf die Füllerschicht beinhaltet ein enormes Einsparungspotential und ist daher aus wirtschaftlichen und ökologischen Gründen besonders vorteilhaft.

Der Vorteil der erfindungsgemäßen Verfahren liegt insbesondere darin, daß auf die üblicherweise notwendige vorherige Grundierung bzw. Vorlackierung bei Kunststoffsubstraten und ggf. auf eine Grundierung, aber auf jeden Fall auf die Applikation üblicherweise notwendiger Füllerschichten verzichtet werden kann. Durch den Zusatz der erfindungsgemäßen Füllstoffkomponente zu einem üblichen Basislacksystem wird eine ausgezeichnete Haftung sowie eine gleichzeitige hervorragende Abdeckung der üblichen Substratfehler, beispielsweise Riefen, Fließlinien und Poren, erzielt. Durch die anschließende Beschichtung mit einem füllstoffkomponentenfreien Basislack wird eine hervorragende Wetterstabilität und Farbtongenauigkeit der erhaltenen Beschichtungen erreicht. Die Verwendung der Füllstoffkomponente ist für das hohe technologische Niveau des Gesamtsystems, beispielsweise hinsichtlich Steinschlagbeständigkeit, verantwortlich. Das Vorliegen von Farb- und/oder Effektpigmenten des gewünschten Farbtons bereits in der ersten, modifizierten Basislackschicht ermöglicht das Überlackieren mit einer sehr dünnen abschließenden Basislackschicht. Der Auftrag aller Lackschichten erfolgt üblicherweise durch pneumatische Spritzapplikationen. Beim Einsatz elektrisch leitfähiger Pigmente in der erfindungsgemäßen Füllstoffkomponente bei der Kunststofflackierung sowie generell bei der Beschichtung metallischer Substrate ist eine elektrostatische Applikation der weiteren Lackschichten möglich.

Die vorliegende Erfindung betrifft ebenfalls die Verwendung der Füllstoffkomponente in Basislacken zur grundierungsfreien Beschichtung von Kunststoff- und Metallsubstraten sowie die Verwendung der Füllstoffkomponente in Basislacken zur Beschichtung von mittels Elektrotauchlackierung grundierten Metallsubstraten.

Nachfolgend wird die Erfindung anhand von Ausführungsbeispielen näher erläutert. Dabei bedeuten Teile Gewichtsteile, sofern nichts anderes angegeben wird.

### Herstellung einer hellen erfindungsgemäßen Füllstoffkomponente (Pigmentpaste A1):

65 % Polyurethandispersion (Handelsprodukt Daotan VTW 1225 der Firma Hoechst) und 25 % Titandioxid (Handelsprodukt Titan Rutil R 900) werden 15 min dissolvert und anschließend 45 min lang bei max. 50 °C auf einer Perlmühle bis zu einer Kornfeinheit von < 15 µm gemahlen. Das Mahlgut wird mit 5 % Butylglykol und 5 % Wasser verdünnt.

### Herstellung einer dunklen, leitfähigen erfindungsgemäßen Füllstoffkomponente (Füllstoffkomponente A2):

Es wird analog der Herstellung der hellen Pigmentpaste A1 verfahren mit dem Unterschied, daß statt 25 % Titandioxid 10 % Titandioxid und 8 % Leitruß (Handelsprodukt Ketjen Black der Firma AKZO) eingemahlen werden.

### Herstellung einer hellen erfindungsgemäßen Füllstoffkomponente (Pigmentpaste A3):

Es wird analog der Herstellung der hellen Pigmentpaste A1 verfahren mit dem Unterschied, daß statt 65 % der Polyurethandispersion Daotan VTW 1225, 55 % dieser Dispersion sowie 10 % einer Melaminharzlösung (Handelsprodukt Cymel 227) verwendet werden.

### Herstellung eines modifizierten erfindungsgemäßen Basislacks B1:

70 % eines wäßrigen Metallic-Basislackes (FW95-Reihe der Firma BASF Lacke + Farben AG) werden unter Rühren mit 30 % der Füllstoffkomponente A1 versetzt und mit deion. Wasser auf eine Spritzviskosität von 20 DIN 4 sec. eingestellt.

### Herstellung eines modifizierten erfindungsgemäßen Basislackes B2:

Es wird wie bei der Herstellung des modifizierten Basislackes B1 verfahren mit dem Unterschied, daß die Füllstoffkomponente A2 anstelle der Füllstoffkomponente A1 verwendet wird.

### Herstellung eines modifizierten erfindungsgemäßen Basislackes B3:

Es wird wie bei der Herstellung des modifizierten Basislackes B1 verfahren mit dem Unterschied, daß die Füllstoffkomponente A3 an Stelle der Füllstoffkomponente A1 eingesetzt wird.

### Beispiel 1:

### Pneumatische Lackierung von Kunststoffteilen

Tafeln oder Anbauteile aus Polycarbonatblends werden mit Isopropanol gewaschen und getrocknet. Der zuvor beschriebene Basislack B1 wird mit einer Fließbecherpistole (Spritzdruck: 4-5 bar, 1,3 mm Düse) in einem Kreuzgang aufgetragen. Die Trockenschichtstärke erreicht dabei 12 bis 17 µm. Nach ca. 2 bis 3 min. Ablüften bei Kabinentemperatur erfolgt der Auftrag des unmodifizierten Basislackes in einem weiteren Kreuzgang. Die Trockenschichtstärke der unmodifizierten Basislackschicht beträgt ca. 7 bis 10 µm. Es erfolgt während 5 min bei Raumtemperatur eine Ablüftung sowie eine weitere forcierte Ablüftung für 10 Minuten bei 60 - 80°C. Nach dem Abkühlen auf Raumtemperatur wird ein handelsüblicher zweikomponentiger Polyurethan-Klarlack auf Polyacrylatbasis (Handelsprodukt GP 71-0109 der Firma BASF Lacke + Farben AG) nach dem Ablüftvorgang mit gleichen Spritzparametern in 2 Kreuzgängen aufgetragen, so daß eine Trockenfilm-Schichtstarke von 25 bis 35 µm resultiert. Das lackierte Kunststoffteil wird nach weiterem 10 bis 15 minütigen Ablüften bei 90°C 30 min in einem Umluftofen getrocknet.

### Beispiel 2:

### Elektrostatische Lackierung von Kunststoffteilen

Der Auftrag der beiden Basislackschichten wird analog Beispiel 1 durchgeführt, wobei als füllstoffkomponentenmodifizierter Basislack der Basislack B2 eingesetzt wird. Die Lackierung des im Beispiel 1 verwendeten Klarlacks erfolgt nun nach Erdung des Teils über elektrostatisch unterstützte pneumatische Pistolen oder über eine Hochrotationsglocke.

### Beispiel 3:

### Pneumatische Lackierung von Metallteilen

Tafeln oder Formkörper aus phosphatiertem Stahl (Bonder 26 der Firma Chemetall) werden mit Isopropanol gewaschen, getrocknet und anschließend wie in Beispiel 1 beschrieben beschichtet, wobei als Füllstoffkomponenten enthaltender Basislack der Basislack B3 und anschließend der entsprechende unmodifizierte, d. h. füllstoffkomponentenfreie Basislack verwendet wird. Nach dem Ablüften der beiden Basislackschichten wird - wie in Beispiel 1 beschrieben - mit einem handelsüblichen selbstvernetzenden Klarlack auf Acrylatharzbasis (Handelsprodukt FF 92-0102 der Firma BASF Lacke + Farben AG) mit gleichen Spritzparametern in 2 Kreuzgängen appliziert, so daß eine Trockenfilmschichtstärke von 25 bis 35 µm resultiert. Das fertig lackierte Metallteil wird nach weiterer Ablüftzeit von 5 Minuten in einem Umluftofen bei 130°C 20 Minuten getrocknet.

### Technologische Prüfungen:

Die lackierten Teile werden 7 Tage bei Raumtemperatur bzw. 24 h forciert bei 60 °C gealtert. Folgende Testergebnisse werden in den Beispielen 1, 2 und 3 erhalten:
Gitterschnitt mit Tesaabriß (DIN 53 151) : Wert 0
Dampfstrahltest nach VW: i. O. (keine Abplatzung)
Steinschlag nach VW: 0 (keine Abplatzung)
Blasen nach 240 h Konstantklima: mogo/gt ebenfalls 0

## Patentansprüche

1. Wäßriger Basislack zur Beschichtung von Metall- und Kunststoffsubstraten, dadurch gekennzeichnet, daß er 10 bis 70 Gew.-% einer Füllstoffkomponente und 90 bis 30 Gew.-% einer wäßrigen üblichen Basislackzusammensetzung, enthaltend ein oder mehrere wasserverdünnbare Bindemittel, Farb- und/oder Effektpigmente, organische Lösemittel und gegebenenfalls Rheologiehilfsmittel, enthält, wobei die Füllstoffkomponente enthält:
a1)10 bis 70 Gew.-% einer wäßrigen Dispersion eines wasserverdünnbaren Polyurethanharzes oder mehrerer wasserverdünnbarer Polyurethanharze, wobei der Polyurethanfeststoffgehalt in der wäßrigen Dispersion 10 bis 60 Gew.-%, vorzugsweise 20 bis 50 Gew.-%, beträgt,
a2)0 bis 30 Gew.-% eines oder mehrerer Aminoplastharze und/oder eines blockierten Polyisocyanats,
a3)0 bis 50 Gew.-% eines oder mehrerer sich von a1) unterscheidender physikalisch trocknender Bindemittel,
a4)5 bis 40 Gew.-% eines oder mehrerer Füllstoffe und/oder Extender,
a5)0 bis 30 Gew.-% Farb- und/oder Effektpigmente,
a6)0 bis 5 Gew.-% eines oder mehrerer Rheologiehilfsmittel und/oder Lackhilfsmittel und,
a7)0 bis 10 Gew.-% organisches Läsemittel.

2. Basislack nach Anspruch 1, dadurch gekennzeichnet, daß die Füllstoffkomponente
40 bis 55 Gew.-% a1)
0 bis 10 Gew.-% a3)
10 bis 30 Gew.-% a4)
5 bis 20 Gew.-% a5)
0,5 bis 2 Gew.-% a6)
3 bis 10 Gew.-% a7)
enthält.

3. Basislack nach Anspruch 1 oder 2, dadurch gekennzeichnet, daß er 30 bis 60 Gew.-% der Füllstoffkomponente und 70 bis 40 Gew.-% der Basislackzusammensetzung enthält.

4. Verfahren zur Direktlackierung von Kunststoffsubstraten dadurch gekennzeichnet, daß direkt auf das Substrat der die Füllstoffkomponente enthaltende Basislack gemäß den Ansprüchen 1 bis 3 aufgebracht wird, nach kurzer Zwischenablüftung ein füllstoffkomponentenfreier Basislack appliziert wird, nach Ablüften mit einem Klarlack überlackiert und anschließend gemeinsam unter Erwärmen ausgehärtet wird.

5. Verfahren zur Direktlackierung von Metallsubstraten, dadurch gekennzeichnet, daß direkt auf das Metallsubstrat der die Füllstoffkomponente enthaltende Basislack gemäß den Ansprüchen 1 bis 3 aufgebracht wird, nach kurzer Zwischenablüftung ein füllstoffkomponentenfreier Basislack appliziert wird, nach Ablüften mit einem Klarlack überlackiert und anschließend gemeinsam unter Erwärmen ausgehärtet wird.

6. Verfahren zum Lackieren von mittels Elektrotauchlackierung grundierten Metallsubstraten, dadurch gekennzeichnet, daß auf das elektrotauchgrundierte Metallsubstrat der die Füllstoffkomponente enthaltende Basislack gemäß den Ansprüchen 1 bis 3 aufgebracht wird, nach kurzer Zwischenablüftung ein füllstoffkomponentenfreier Basislack appliziert wird, nach kurzem Ablüften mit einem Klarlack überlackiert und anschließend gemeinsam unter Erwärmen ausgehärtet wird.

7. Verwendung eines Basislacks nach einem der Ansprüche 1 bis 3 zur Direktlackierung von Kunststoffsubstraten.

8. Verwendung eines Basislacks nach einem der Ansprüche 1 bis 3 zur Direktbeschichtung von Metallsubstraten.

9. Verwendung eines Basislacks nach einem der Ansprüche 1 bis 3 zur Beschichtung von mittels Elektrotauchlackierung grundierten Metallsubstraten.

## Claims

1. Aqueous basecoat for coating substrates of metal and plastic, characterized in that it comprises from 10 to 70% by weight of a filler component and from 90 to 30% by weight of a conventional aqueous basecoat composition comprising one or more water-dilutable binders, colour pigments and/or effect pigments, organic solvents and, if desired, rheological assistants, the filler component comprising:
a1) from 10 to 70% by weight of an aqueous dispersion of a water-dilutable polyurethane resin or of a plurality of water-dilutable polyurethane resins, the solids content of polyurethane in the aqueous dispersion being from 10 to 60% by weight, preferably from 20 to 50% by weight,
a2) from 0 to 30% by weight of one or more amino resins and/or of a blocked polyisocyanate,
a3) from 0 to 50% by weight of one or more physically drying binders which are different from a1),
a4) from 5 to 40% by weight of one or more fillers and/or extenders,
a5) from 0 to 30% by weight of colour pigments and/or effect pigments,
a6) from 0 to 5% by weight of one or more rheological auxiliaries and/or paint auxiliaries, and
a7) from 0 to 10% by weight of organic solvent.

2. Basecoat according to Claim 1, characterized in that the filler component comprises
from 40 to 55% by weight of a1)
from 0 to 10% by weight of a3)
from 10 to 30% by weight of a4)
from 5 to 20% by weight of a5)
from 0.5 to 2% by weight of a6)
from 3 to 10% by weight of a7).

3. Basecoat according to Claim 1 or 2, characterized in that it comprises from 30 to 60% by weight of the filler component and from 70 to 40% by weight of the basecoat composition.

4. Process for the direct coating of plastic substrates, characterized in that the filler component-containing basecoat is applied directly to the substrate according to Claims 1 to 3, after short intermediate evaporation a basecoat which is free of filler component is applied, after evaporation a clearcoat is applied over these basecoats, and then the coats are cured together, with heating.

5. Process for the direct coating of metal substrates, characterized in that the filler component-containing basecoat is applied directly to the metal substrate according to Claims 1 to 3, after short intermediate evaporation a basecoat is aplied which is free of filler components, after evaporation a clearcoat is applied over these basecoats, and then the coats are cured together, with heating.

6. Process for coating metal substrates primed by means of electrodeposition coating, characterized in that the filler component-containing basecoat is applied to the electrodeposition-primed metal substrate according to Claims 1 to 3, after short intermediate evaporation a basecoat is applied which is free of filler components, after evaporation a clearcoat is applied over these basecoats, and then the coats are cured together, with heating.

7. Use of a basecoat according to one of Claims 1 to 3, for the direct coating of plastic substrates.

8. Use of a basecoat according to one of Claims 1 to 3, for the direct coating of metal substrates.

9. Use of a basecoat according to one of Claims 1 to 3, for the coating of metal substrates primed by means of electrodeposition coating.

## Revendications

1. Couche de fond aqueuse pour le revêtement de substrats métalliques et plastiques, caractérisée en ce qu'elle contient de 10 à 70% en poids d'un composant charge et de 90 à 30% en poids d'une composition de couche de fond aqueuse traditionnelle comprenant un ou plusieurs liants diluables à l'eau, des pigments colorants et/ou des pigments à effet, des solvants organiques et éventuellement des auxiliaires rhéologiques, le composant charge contenant :
a1) de 10 à 70% en poids d'une dispersion aqueuse d'une résine de polyuréthanne diluable à l'eau ou de plusieurs résines de polyuréthannes diluables à l'eau, la teneur en matières solides de polyuréthanne dans la dispersion aqueuse étant de 10 à 60% en poids, de préférence de 20 à 50% en poids,
a2) de 0 à 30% en poids d'une ou de plusieurs résines aminoplastes et/ou d'un polyisocyanate bloqué,
a3) de 0 à 50% en poids d'un ou de plusieurs liants séchant physiquement, différents de a1),
a4) de 5 à 40% en poids d'un ou de plusieurs agents d'étalement et/ou charges,
a5) de 0 à 30% en poids de pigments colorants et/ou de pigments à effet,
a6) de 0 à 5% en poids d'un ou de plusieurs auxiliaires rhéologiques et/ou auxiliaires de peinture, et
a7) de 0 à 10% en poids de solvant organique.

2. Couche de fond selon la revendication 1, caractérisée en ce que le composant charge contient
de 40 à 55% en poids de a1)
de 0 à 10% en poids de a3)
de 10 à 30% en poids de a4)
de 5 à 20% en poids de a5)
de 0,5 à 2% en poids de a6)
de 3 à 10% en poids de a7).

3. Couche de fond selon la revendication 1 ou 2, caractérisée en ce qu'elle contient de 30 à 60% en poids du composant charge et de 70 à 40% en poids de la composition de couche de fond.

4. Procédé de revêtement direct de substrats plastiques, caractérisé en ce que l'on applique directement la couche de fond contenant le composant charge selon les revendications 1 à 3 sur le substrat, on applique une couche de fond exempte de composant charge après une courte évaporation intermédiaire, on applique une couche transparente après évaporation et on durcit ensuite conjointement en chauffant.

5. Procédé de revêtement direct de substrats métalliques, caractérisé en ce que l'on applique directement la couche de fond contenant le composant charge selon les revendications 1 à 3 sur le substrat métallique, on applique une couche de fond exempte de composant charge après une courte évaporation intermédiaire, on applique une couche transparente après évaporation et on durcit ensuite conjointement en chauffant.

6. Procédé de revêtement de substrats métalliques apprêtés à l'aide d'un revêtement par électrodéposition, caractérisé en ce que l'on applique la couche de fond contenant le composant charge selon les revendications 1 à 3 sur le substrat métallique apprêté par électrodéposition, on applique une couche de fond exempte de composant charge après une courte évaporation intermédiaire, on applique une couche transparente après une courte évaporation et on durcit ensuite conjointement en chauffant.

7. Utilisation d'une couche de fond selon l'une quelconque des revendications 1 à 3 pour le revêtement direct de substrats plastiques.

8. Utilisation d'une couche de fond selon l'une quelconque des revendications 1 à 3 pour le revêtement direct de substrats métalliques.

9. Utilisation d'une couche de fond selon l'une quelconque des revendications 1 à 3 pour le revêtement de substrats métalliques apprêtés à l'aide d'un revêtement par électrodéposition.
